# EUROPEAN PATENT APPLICATION

(11) **EP 4 700 980 A1**
(43) Date of publication of application: **25.02.2026**
(21) Application number: 25196577.8
(22) Date of filing: 19.08.2025
(51) Int. Cl.: H01Q 1/02, H01Q 1/22, H01Q 1/42, H01Q 21/08, H01Q 21/24, H01Q 21/28, H01Q 1/12, H01Q 9/04, H01Q 9/20

(54) **DISPLAY DEVICE**

(30) Priority: 20.08.2024 KR 20240110944
(71) Applicant: LG Electronics Inc., Yeongdeungpo-gu Seoul 07336 (KR)
(72) Inventor: SUH, Yusuhk, Seoul (KR); LEE, Dongik, Seoul (KR)
(74) Representative: Schott, Jakob Valentin

(57) **Abstract**

A display device is disclosed. The display device includes: a display panel including a flat surface on which an image is displayed; a frame disposed at a rear of the display panel and to which the display panel is coupled; and a communication box adjacent to one side of the frame and coupled to the frame. The communication box includes: an antenna including a flat surface defined in a direction that intersects the flat surface of the display panel; an outer barrier disposed at a front of the antenna facing the front of the display panel; and an inner barrier positioned between the antenna and the outer barrier. The outer barrier includes: a front outer barrier positioned forward of the inner barrier; a lower outer barrier positioned below the inner barrier; and a round outer barrier connecting the front outer barrier and the lower outer barrier and forming a corner.

## Description

### BACKGROUND

### 1. Field

The present disclosure relates to a display device.

### 2. Description of the Related Art

With the development of information society, there has been a growing demand for various types of display devices. In order to meet such demand, various display devices, such as a liquid crystal display (LCD) device, an organic light emitting diode (OLED) display, a micro-LED display, and the like, have been developed and used.

Among them, an LCD panel includes a TFT substrate and a color substrate that are opposite each other with a liquid crystal layer interposed therebetween, and can display an image using light provided from a backlight unit. In addition, an OLED panel can display an image by depositing a self-luminescent organic layer on a substrate having a transparent electrode formed thereon. In particular, a display device including an OLED panel requires no backlight unit, which is advantageous to achieve an ultra-thin profile.

A control box may be placed at a position apart from a display device and used in close proximity to a user. The control box can provide various information to the display device. For example, the control box may be an AV box. The control box can exchange information wired/wireless with a display head equipped with a display panel for displaying an image.

Recently, numerous research has been conducted on the connectivity of such a display device.

### SUMMARY

It is an object of the present disclosure to solve the above and other problems.

It is another object of the present disclosure to provide a display device including a wireless communication module.

It is another object of the present disclosure to provide a structure for effectively dissipating heat from a communication module.

It is another object of the present disclosure to provide a display device capable of improving reception performance of an antenna of a communication module.

It is another object of the present disclosure to provide a structure for ensuring rigidity of a communication module.

In accordance with an aspect of the present disclosure, the above and other objects can be accomplished by providing a display device including: a display panel configured to display an image toward a front; a frame disposed at a rear of the display panel and to which the display panel is coupled; a communication box positioned at one side of the frame; and an inner plate adjacent to the one side of the frame and coupled to a rear of the frame, the inner plate including a first part extending to an inside of the communication box. The communication box may include: a communication box cover defining an outer appearance of the communication box; an antenna module positioned inside the communication box cover and in contact with the first part of the inner plate; and an antenna case positioned outside the antenna module and a portion of the first part of the inner plate, the antenna case covering the antenna module. The antenna module may include a first array antenna disposed toward the front of the display panel, the antenna case comprises a first surface facing the first array antenna of the antenna module, and the communication box cover may include a first surface facing the first surface of the antenna case. The first surface of the antenna case may function as a first radome of the first array antenna, and the first surface of the communication box cover may function as a second radome of the first array antenna.

A flat surface of the antenna module may intersect a flat surface of the display panel. The first surface of the antenna case may intersect the flat surface of the antenna module, and may extend in a direction parallel to the flat surface of the display panel. The first surface of the communication box cover may extend in a direction parallel to the first surface of the antenna case.

The communication box cover may further include a second surface that is connected to the first surface of the communication box cover and positioned below the antenna module. One end of the second surface of the communication box cover may be aligned with a front edge of the antenna module.

A length of the first surface and the second surface of the communication box cover may be at least twice a length of the first surface of the antenna case.

A first gap from the front edge of the antenna module to the first surface of the antenna case may be less than a second gap from the first surface of the antenna case to the first surface of the communication box cover.

A third gap from a lower end of the first surface of the antenna case to the second surface of the communication box cover may be greater than the first gap.

The antenna case may include: a lower case that provides an accommodation space for the antenna module; and an upper case covering the lower case. The lower case may include: a bottom part facing a lower surface of the antenna module; and a side part that forms a wall with respect to the bottom part. The bottom part may include a first opening portion through which the lower surface of the antenna module is exposed to an outside.

The side part may include: a front wall defining at least a portion of the first surface of the antenna case; a rear wall facing the front wall; and a side wall connecting the front wall and the rear wall.

The bottom part may further include a second opening portion adjacent to the first opening portion.

The antenna module may include: a substrate having one surface that defines the lower surface; a first antenna portion positioned on the one surface of the substrate; a second antenna portion positioned on one side of the substrate; and a third antenna portion positioned on another side of the substrate that is connected to the one side of the substrate. The first antenna portion may be aligned with the first opening portion of the lower case, the second antenna portion may be exposed to the outside through the first opening portion of the lower case, and the third antenna portion may be exposed to the outside through the second opening portion of the lower case. The second antenna portion may be the first array antenna.

The first antenna portion may include a plurality of patches, the second antenna portion may include a first plurality of dipoles, and the third antenna portion may include a second plurality of dipoles. The number of the first plurality of dipoles may be greater than the number of the second plurality of dipoles.

The antenna module may include a cover layer covering the one surface of the substrate and configured to expose the first antenna portion.

The frame may include a metal. The antenna case and the communication box may each include a synthetic resin.

The display device according to the present disclosure has the following effects.

According to at least one of the embodiments of the present disclosure, it is possible to provide a display device including a wireless communication module.

According to at least one of the embodiments of the present disclosure, it is possible to provide a structure for effectively dissipating heat from a communication module.

According to at least one of the embodiments of the present disclosure, it is possible to provide a display device capable of improving reception performance of an antenna of a communication module.

According to at least one of the embodiments of the present disclosure, it is possible to provide a structure for ensuring rigidity of a communication module.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

### BRIEF DESCRIPTION OF THE DRAWINGS

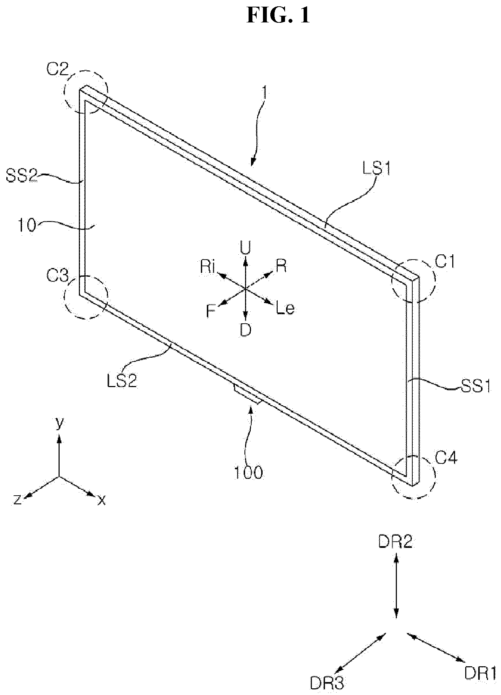

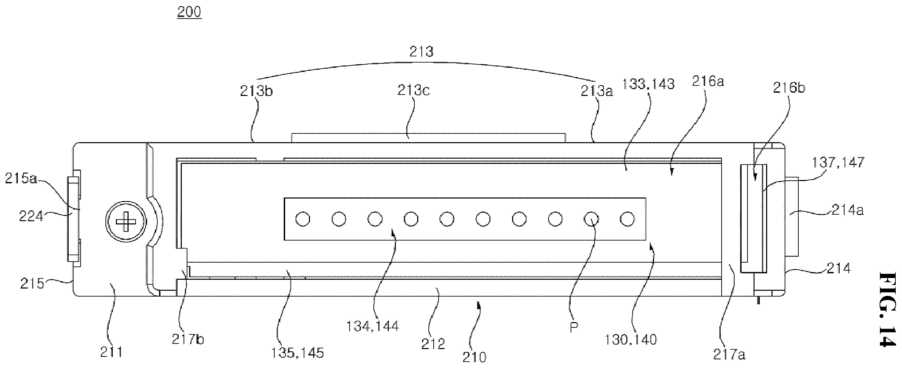

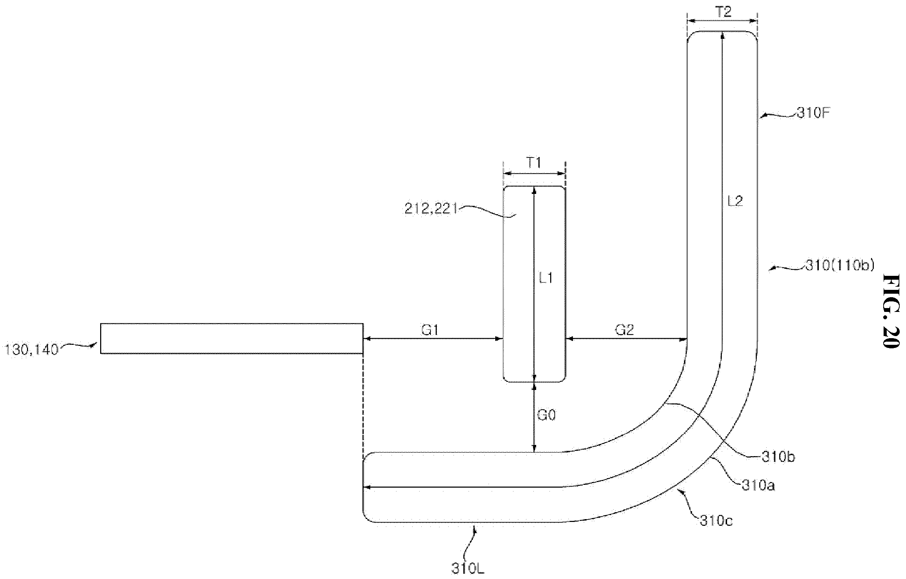

FIGS. 1 to 22 are diagrams illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand various technical features and it should be understood that the embodiments disclosed herein are not limited by the accompanying drawings. As such, the present disclosure should be construed to extend to any alterations, equivalents, and substitutes in addition to those which are particularly set out in the accompanying drawings.

Although the terms "first", "second", etc. may be used herein to describe various elements, these elements should not be limited by these terms. These terms are only used to distinguish one element from another.

It will be understood that when a component is referred to as being "coupled" or "connected" to another component, it may be directly coupled or connected to another component, or intervening components may be present. In contrast, when a component is referred to as being "directly coupled" or "directly connected" to another component, there are no intervening components present.

A singular representation may include a plural representation unless the context clearly indicates otherwise.

Terms such as "comprises or includes" or "has" are used herein and should be understood that they are intended to indicate an existence of features, numbers, steps, operations, elements, components, or combinations thereof, disclosed in the specification, but do not preclude the presence or addition of one or more other features, numbers, steps, operations, elements, components, or combinations thereof.

The directions "up (U)", "down (D)", "left (Le)", "right (Ri)", "front (F)", and "rear (R)" shown in the drawings are used only for convenience of description, and the technical concept disclosed in this specification is not limited by these directions.

Referring to FIG. 1, a display device 1 may include a display panel 10. The display panel 10 may display an image on a front surface thereof.

The display device 1 may include a first long side LS1, a second long side LS2 opposite the first long side LS1, a first short side SS1 adjacent to the first long side LS1 and the second long side LS2, and a second short side SS2 opposite the first short side SS1. Meanwhile, for ease of explanation, it is illustrated and described that lengths of the first and second long sides LS1 and LS2 are greater than lengths of the first and second short sides SS1 and SS2, but the lengths of the first and second long sides LS1 and LS2 may be substantially equal to the lengths of the first and second short sides SS1 and SS2.

A direction parallel to the long sides LS1 and LS2 of the display device 1 may be referred to as a left-right direction or a first direction DR1. A direction parallel to the short sides SS1 and SS2 of the display device 1 may be referred to as an up-down direction or a second direction DR2. A direction perpendicular to the long sides LS1 and LS2 and the short sides SS1 and SS2 of the display device 1 may be referred to as a front-rear direction or a third direction DR3.

A direction in which the display panel 10 displays an image may be referred to as a front (F, z), and a direction opposite to the front may be referred to as a rear (R, -z). The first long side LS1 may be referred to as an upper side (U, y). The second long side LS2 may be referred to as a lower side (D, -y). The first short side SS1 may be referred to as a left side (Le, x). The second short side SS2 may be referred to as a right side (Ri, -x).

The first long side LS1, the second long side LS2, the first short side SS1, and the second short side SS2 may be referred to as edges of the display device 1. Points where the first long side LS1, the second long side LS2, the first short side SS1, and the second short side SS2 meet one another may be referred to as corners.

For example, a point where the first short side SS1 and the first long side LS1 meet may be referred to as a first corner C1; a point where the first long side LS1 and the second short side SS2 meet may be referred to as a second corner C2; a point where the second short side SS2 and the second long side LS2 meet may be referred to as a third corner C3; and a point where the second long side LS2 and the first short side SS1 meet may be referred to as a fourth corner C4.

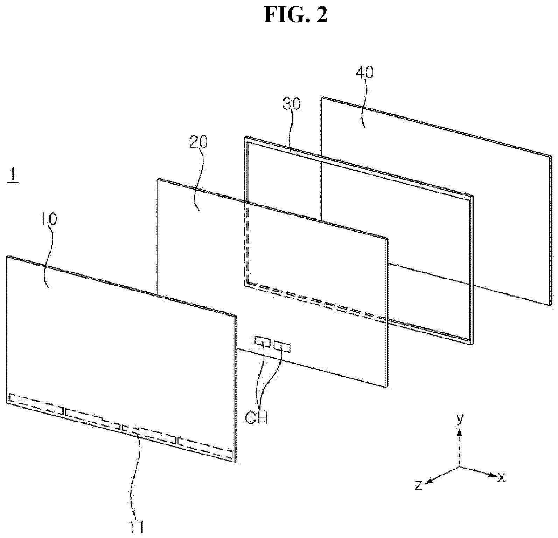

Referring to FIGS. 1 and 2, the display device 1 may include a display panel 10, a frame 20, a side frame 30, and a back cover 40.

The display panel 10 may define a front surface of the display device 1 and may display an image toward the front. For example, the display panel 10 may be an organic light emitting diode (OLED) panel. However, the display panel applicable to the present disclosure is not limited to the OLED panel. The display panel 10 may include a plurality of pixels to output an image in accordance with color, brightness, and chroma of each pixel. The display panel 10 may be divided into an active area in which an image is displayed and a de-active area in which no image is displayed. The display panel 10 may generate light corresponding to red, green or blue color in response to a control signal.

The frame 20 may be positioned at the rear of the display panel 10, and the display panel 10 may be coupled to the frame 20. For example, the frame 20 may include a metal material. A cable hole CH may be formed through the frame 20. Meanwhile, the frame 20 may be referred to as a main frame 20, a module cover 20, a rear frame 20, or a rear cover 20.

The side frame 30 may extend along a periphery of the frame 20. The frame 20 may be coupled to the side frame 30 at the front or rear of the side frame 30. The side frame 30 may cover the lateral surfaces of the display panel 10 and the frame 20. Meanwhile, the side frame 30 may be referred to as a guide panel.

The back cover 40 may be disposed at the rear of the frame 20, and may be coupled to the frame 20. For example, the back cover 40 may be an injection-molded part made of resin. As another example, the back cover 40 may include a metal material.

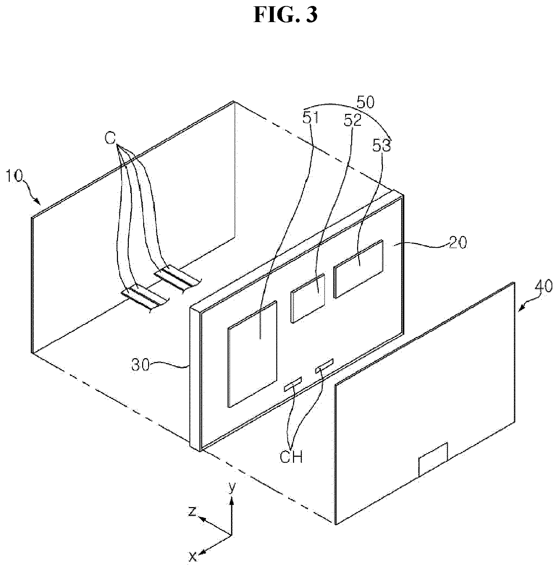

Referring to FIG. 3, boards 50 may be mounted on the frame 20 at the rear of the frame 20. A plurality of electronic elements may be mounted on the boards 50. The boards 50 may be printed circuit boards (PCBs), and may be electrically connected to electronic components of the display device.

For example, the boards 50 may include a power supply board 51 that provides power to each component of the display device, a timing controller board 52 that provides an image (or video) signal to the display panel 10, and a main board 53 that provides an image (or video) signal to the display panel 10 and/or the timing controller board 52 and controls the display device.

Meanwhile, a source PCB (S-PCB) 11 (see FIG. 2) may be adjacent to a lower side of the display panel 10, and may be coupled to a rear surface of the display panel 10. A cable C may pass through the cable hole CH formed in a lower portion of the frame 20, and may connect the S-PCB 11 and the timing controller board 52. Accordingly, the cable C may transmit digital video data and a timing control signal from the timing controller board 52 to the S-PCB 11. For example, the cable C may be a flexible flat cable (FFC).

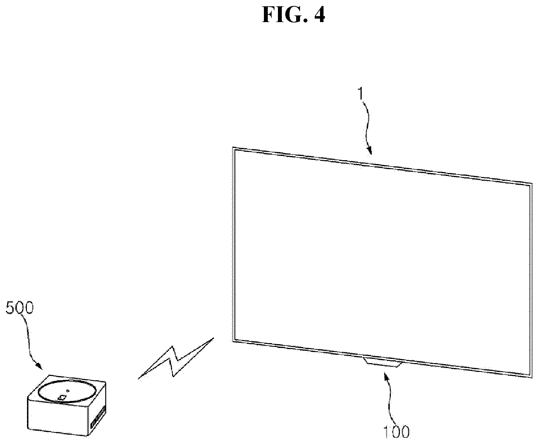

Referring to FIG. 4, a control box 500 may be positioned apart from the display device 1. The control box 500 may be referred to as a set-top box. The control box 500 may wirelessly exchange information with the display device 1. A communication module (not shown) of the control box 500 may perform wireless communication with a communication module 100 of the display device 1. At least a portion of the communication module 100 may protrude outward from an edge of the display device 1, thereby enabling smooth wireless communication between the communication module 100 and the communication module of the control box 500.

The stability of wireless communication between the control box 500 and the display device 1 may vary depending on the relative positions of the control box 500 and the display device 1. The position where the display device 1 is placed may be constant (or fixed) to maintain a certain distance from a user. As for the control box 500, there is a need to increase the degree of freedom in placement (i.e., placement flexibility) for user convenience.

Meanwhile, the control box 500 may be one component of the display device 1. In this case, the display device 1 including the display panel 10 may be referred to as a head 1.

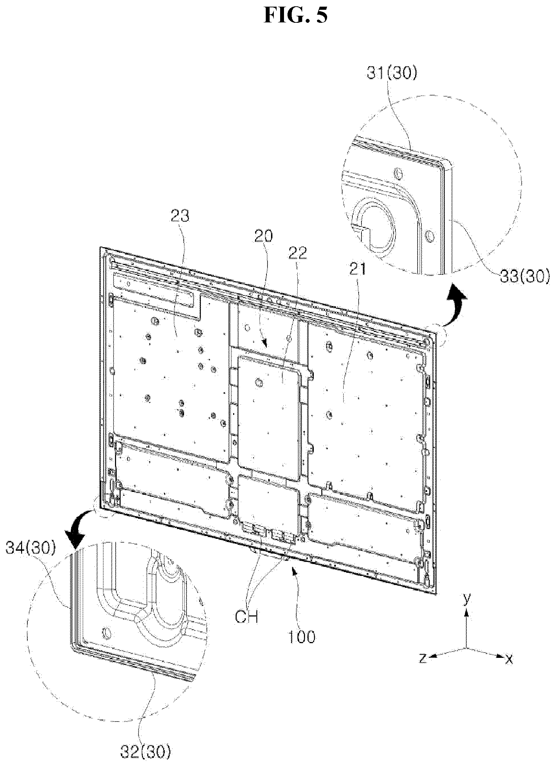

Referring to FIG. 5, the side frame 30 may include a first part 31, a second part 32, a third part 33, and a fourth part 34. The first part 31 may extend along an upper side of the frame 20, and may define the first long side LS1 (see FIG. 1). The third part 33 may be bent downward from a right end of the first part 31 and extend along a right side of the frame 20, and may define the second short side SS2 (see FIG. 1). The second part 32 may be bent from a lower end of the third part 33 and extend along a lower side of the frame 20, and may define the second long side LS2 (see FIG. 1). The fourth part 34 may be bent upward from a left end of the second part 32 and extend along a left side of the frame 20, and may define the first short side SS1 (see FIG. 1).

A first forming portion 21, a second forming portion 22, and a third forming portion 23 may be formed by being pressed reward from a front surface of the frame 20. The first forming portion 21 may be positioned close to the right side of the frame 20, the third forming portion 23 may be positioned close to the left side of the frame 20, and the second forming portion 22 may be positioned between the first forming portion 21 and the third forming portion 23. The power supply board 51 (see FIG. 3) may be mounted on a rear surface of the first forming portion 21. The timing controller board 52 (see FIG. 3) may be mounted on a rear surface of the second forming portion 22. The main board 53 (see FIG. 3) may be mounted on a rear surface of the third forming portion 23.

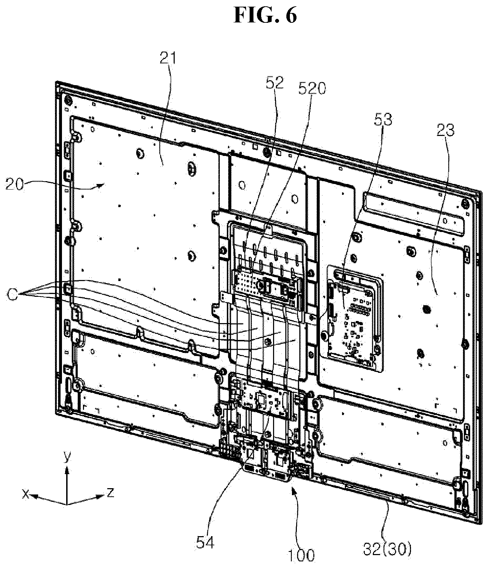

Referring to FIG. 6, a shield plate 520 may be mounted on a rear surface of the timing controller board 52. A first board 54 may be spaced downward from the timing controller board 52, and may be mounted on a rear surface of the frame 20. A second board 53 may be spaced rightward from the timing controller board 52, and may be mounted on the rear surface of the frame 20. A shield plate (not shown) may be mounted on a rear surface of each of the first board 54 and the second board 53. The communication module 100 may receive compressed sound and/or video data from the communication module of the control box 500 (see FIG. 4). The first board 54 may decompress the sound and/or video data received from the communication module 100 and provide it to the second board 53 after conversion. The second board 53 may provide the data received from the first board 54 to the display panel 10 (see FIG. 3) via the timing controller board 52. For example, the first board 54 may be a WAV (waveform audio format) board or a WAV22 board, and the second board 53 may be an AMP (amplifier) board. For example, the second board 53 may be the main board 53. The communication module 100 may be referred to as a communication unit 100 or a communication box 100.

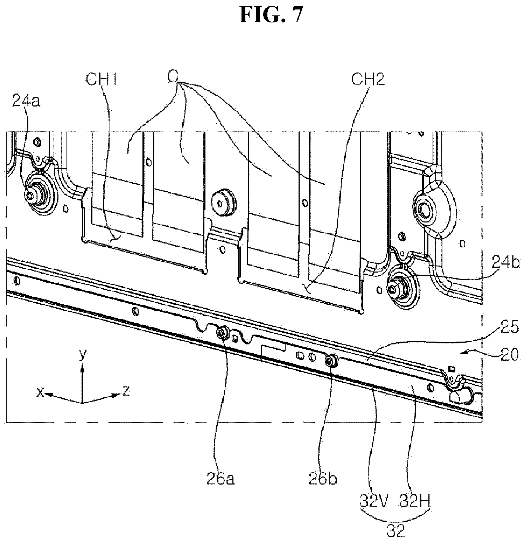

Referring to FIG. 7, a first cable hole CH1 and a second cable hole CH2 may be formed through the frame 20 in the front-rear direction, and may be adjacent to the second part 32. The first cable hole CH1 may be positioned adjacent to, but spaced apart from, the second cable hole CH2. For example, four cables C may be arranged in pairs, forming two pairs. One pair may pass through the first cable hole CH1, and the other pair may pass through the second cable hole CH2.

The second part 32 may include a vertical portion 32V and a horizontal portion 32H. The vertical portion 32V may extend along the lower side of the frame 20, and may define a lower side of the second part 32. The vertical portion 32V may have a width in a direction intersecting the frame 20. In other words, the length of the vertical portion 32V may be defined in the left-right direction, the width of the vertical portion 32V may be defined in the front-rear direction, and the thickness of the vertical portion 32V may be defined in the up-down direction.

The horizontal portion 32H may protrude toward the rear of the frame 20 from the upper side of the frame 20. The horizontal portion 32H may be disposed in parallel with the frame 20 at the rear of the frame 20. In other words, the length of the horizontal portion 32H may be defined in the left-right direction, the width of the horizontal portion 32H may be defined in the up-down direction, and the thickness of the horizontal portion 32H may be defined in the front-rear direction.

Meanwhile, a pressed portion 25 may be formed by being pressed forward from the rear surface of the frame 20, and may define the lower side of the frame 20. A front surface of the pressed portion 25 may be in contact with a rear surface of the horizontal portion 32H. The horizontal portion 32H may be coupled or fixed to the pressed portion 25.

A lower fixing part 26a, 26b may protrude toward the horizontal portion 32H from the pressed portion 25, and may pass through the horizontal portion 32H. A first lower fixing part 26a may be spaced leftward from a second lower fixing part 26b. An upper fixing part 24a, 24b may protrude rearward from the frame 20. A first upper fixing part 24a may be adjacent to the first cable hole CH1, and a second upper fixing part 24b may be adjacent to the second cable hole CH2.

For example, the lower fixing part 26a, 26b and the upper fixing part 24a, 24b may be PEM nuts.

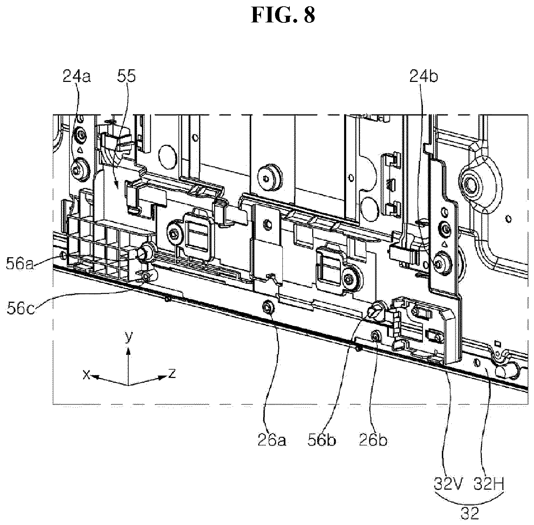

Referring to FIG. 8, a base 55 may be detachably coupled to the frame 20 and the second part 32 at the rear of the frame 20. The base 55 may be referred to as a mount base 55. The base 55 may be positioned above the vertical portion 32V. A portion of the base 55 may cover at least a portion of the rear of the cable hole CH1, CH2 (see FIG. 7). A portion of the base 55 may cover a portion of the rear surface of the horizontal portion 32H. The lower fixing part 26a, 26b and the upper fixing part 24a, 24b may pass through the base 55.

A boss 56a, 56b and a third lower fixing part 56c may protrude rearward from the base 55. The third lower fixing part 56c may be adjacent to the vertical portion 32V, and may be positioned opposite the horizontal portion 32H with respect to the base 55. The third lower fixing part 56c may be positioned opposite the second lower fixing part 26b with respect to the first lower fixing part 26a. A first boss 56a may be positioned adjacent to but spaced upward from the third lower fixing part 56c. A second boss 56b may be positioned adjacent to but spaced upward from the second lower fixing part 26b. For example, the third lower fixing part 56c may be a PEM nut. Meanwhile, the boss 56a, 56b may be referred to as a fixing pin.

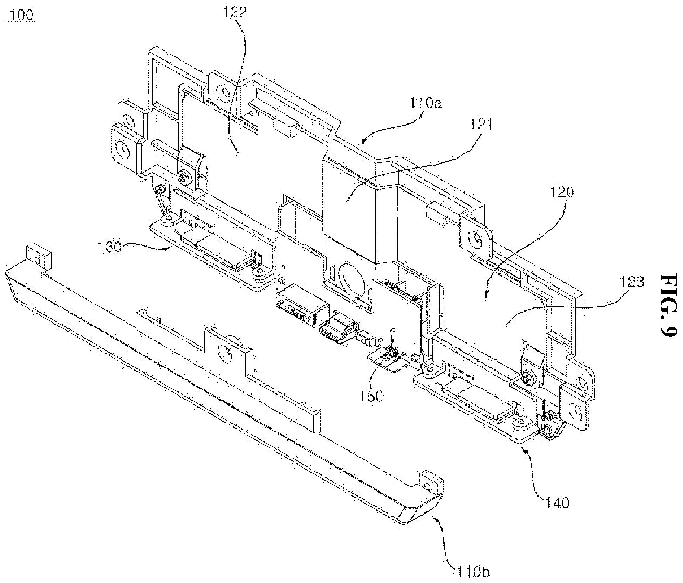

Referring to FIG. 9, the communication module 100 may include a rear cover 110a, a front cover 110b, an inner plate 120, a first antenna module 130, a second antenna module 140, and an infrared transceiver unit 150. The antenna module 130, 140 may be referred to as an antenna 130, 140. For example, the antenna module may be an AIP (antenna in package) module.

The inner plate 120 may be coupled or fixed to a front surface of the rear cover 110a. For example, the rear cover 110a may be an injection-molded plastic part. The inner plate 120 may be referred to as a heat dissipation plate 120. The inner plate 120 may include metal. For example, the inner plate 120 may include aluminum. The inner plate 120 may include a center plate 121, a first connecting plate 122, and a second connecting plate 123. The first connecting plate 122 and the second connecting plate 123 may be opposite each other with respect to the center plate 121.

The infrared transceiver unit 150 may be disposed between the first connecting plate 122 and the second connecting plate 123, and may be coupled or fixed to the rear cover 110a. The infrared transceiver unit 150 may be positioned below the center plate 121.

The first antenna 130 may be coupled or fixed to the first connecting plate 122, and the second antenna 140 may be coupled or fixed to the second connecting plate 123. For example, the first antenna 130 may be a left antenna, and the second antenna 140 may be a right antenna.

The front cover 110b may be coupled to the rear cover 110a. The front cover 110b may cover the first antenna 130, the second antenna 140, and/or the infrared transceiver unit 150. For example, the front cover 110b may be an injection-molded plastic part.

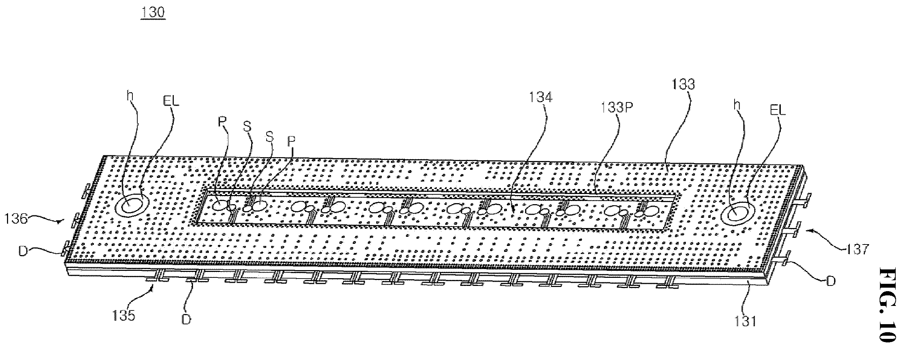

Referring to FIG. 10, the first antenna module 130 may include a substrate 131, a cover frame 133, a first antenna portion 134, a second antenna portion 135, a third antenna portion 136, and a fourth antenna portion 137. The cover frame 133 may be referred to as a cover layer 133.

The substrate 131 may be a PCB having a rectangular shape. The substrate 131 may include a front surface and a rear surface, and the front surface and the rear surface may face each other. The length of a long side of the substrate 131 may be 4 to 6 times the length of a short side of the substrate 131. For example, the first antenna module 130 may have a length of 46 mm and a width of 9.5 mm.

The cover frame 133 may cover a portion of the front surface of the substrate 131. The cover frame 133 may have a shape corresponding to the shape of the substrate 131, and may have an opening 133P at its center.

The first antenna portion 134 may be formed on the front surface of the substrate 131, and may be exposed to the outside through the opening 133P of the cover frame 133. The second antenna portion 135 may be positioned at the long side of the substrate 131. The third antenna portion 136 may be positioned at one short side of the substrate 131, and the fourth antenna portion 137 may be positioned at the other short side of the substrate 131. The third antenna portion 136 and the fourth antenna portion 137 may be opposite each other with respect to the first antenna portion 134.

The first antenna portion 134 may include a plurality of patches P and a plurality of feeding portions S. The patch P may be a circular electrode. The patches P may be sequentially arranged at regular intervals in a longitudinal direction of the substrate 131. For example, 12 patches P may be provided. The feeding portions S may be formed on the front surface of the substrate 131, adjacent to the patches P. The feeding portion S may be electrically connected to the patch P. For example, 12 feeding portions S may be provided. Each of the feeding portions S may be connected to a respective one of the patches P. For example, the first antenna portion 134 may detect a horizontally polarized wave.

A pair of feeding portions S may be positioned between a pair of patches P. One of the pair of feeding portions S may extend from one long side to the other long side of the cover frame 133, and may be bent adjacent to one of the pair of patches P and connected to the one patch P. The other of the pair of feeding portions S may extend from the other long side to the one long side of the cover frame 133, and may be bent adjacent to the other of the pair of patches P and connected to the other patch P.

The second antenna portion 135 may be formed along the long side of the substrate 131. The second antenna portion 135 may include a plurality of dipoles D. The plurality of dipoles D may be sequentially arranged along the long side of the substrate 131. For example, 14 dipoles D may be provided. For example, the second antenna portion 135 may detect a horizontally polarized wave. The second antenna portion 135 may be referred to as a first array antenna 135.

The third antenna portion 136 may be formed along one short side of the substrate 131. The third antenna portion 136 may include a plurality of dipoles D. The plurality of dipoles D may be sequentially arranged along the one short side of the substrate 131. For example, three dipoles D may be provided. For example, the third antenna portion 136 may detect a horizontally polarized wave.

The fourth antenna portion 137 may be formed along the other short side of the substrate 131. The fourth antenna portion 137 may include a plurality of dipoles D. The plurality of dipoles D may be sequentially arranged along the other short side of the substrate 131. For example, three dipoles D may be provided. For example, the fourth antenna portion 137 may detect a horizontally polarized wave.

A fastening hole h may be formed through the front and rear surfaces of the substrate 131. There may be a plurality of fastening holes h. A first fastening hole h may be formed between the first antenna portion 134 and the third antenna portion 136, and a second fastening hole h may be formed between the first antenna portion 134 and the fourth antenna portion 137. A ground electrode EL may be formed around the fastening hole h. The fastening hole h and/or the ground electrode EL may be omitted.

Accordingly, the first antenna module 130 may improve the transmission and reception sensitivity of radio waves.

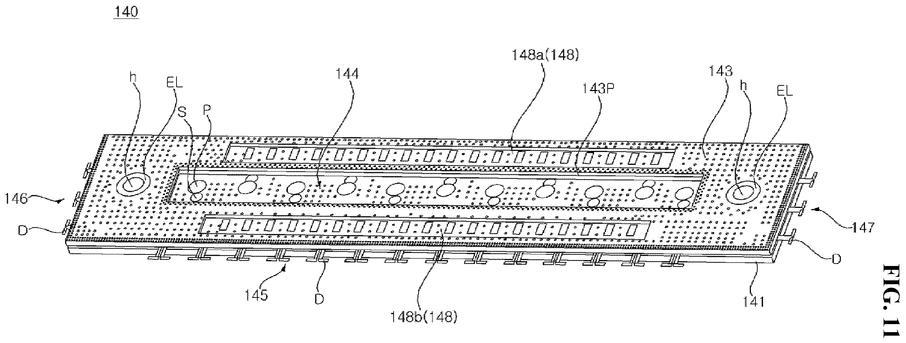

Referring to FIG. 11, the second antenna module 140 may include a substrate 141, a cover frame 143, a first antenna portion 144, a second antenna portion 145, a third antenna portion 146, a fourth antenna portion 147, and a dummy antenna portion 148. The cover frame 143 may be referred to as a cover layer 143.

The substrate 141 may be a PCB having a rectangular shape. The substrate 141 may include a front surface and a rear surface, and the front surface and the rear surface may face each other. The length of a long side of the substrate 141 may be 4 to 6 times the length of a short side of the substrate 141. For example, the second antenna module 140 may have a length of 46 mm and a width of 9.5 mm.

The cover frame 143 may cover a portion of the front surface of the substrate 141. The cover frame 143 may have a shape corresponding to the shape of the substrate 141, and may have an opening 143P at its center.

The first antenna portion 144 may be formed on the front surface of the substrate 141, and may be exposed to the outside through the opening 143P of the cover frame 143. The second antenna portion 145 may be positioned at the long side of the substrate 141. The third antenna portion 146 may be positioned at one short side of the substrate 141, and the fourth antenna portion 147 may be positioned at the other short side of the substrate 141. The third antenna portion 146 and the fourth antenna portion 147 may be opposite each other with respect to the first antenna portion 144.

The first antenna portion 144 may include a plurality of patches P and a plurality of feeding portions S. The patch P may be a circular electrode. The patches P may be sequentially arranged at regular intervals in a longitudinal direction of the substrate 141. For example, 12 patches P may be provided. The feeding portions S may be formed on the front surface of the substrate 141, adjacent to the patches P. The feeding portion S may be electrically connected to the patch P. For example, 12 feeding portions S may be provided. Each of the feeding portions S may be connected to a respective one of the patches P. Each of the feeding portions S may be linearly connected to a respective one of the patches P from a long side of the opening 143P of the cover frame 143. Each of the feeding portions S may be positioned between the long side of the cover frame 143 and a respective one of the patches P. For example, the first antenna portion 144 may detect a vertically polarized wave.

The second antenna portion 145 may be formed along the long side of the substrate 141. The second antenna portion 145 may include a plurality of dipoles D. The plurality of dipoles D may be sequentially arranged along the long side of the substrate 141. For example, 14 dipoles D may be provided. For example, the second antenna portion 145 may detect a horizontally polarized wave. The second antenna portion 145 may be referred to as a first array antenna 145.

The third antenna portion 146 may be formed along one short side of the substrate 141. The third antenna portion 146 may include a plurality of dipoles D. The plurality of dipoles D may be sequentially arranged along the one short side of the substrate 141. For example, three dipoles D may be provided. For example, the third antenna portion 146 may detect a horizontally polarized wave.

The fourth antenna portion 147 may be formed along the other short side of the substrate 141. The fourth antenna portion 147 may include a plurality of dipoles D. The plurality of dipoles D may be sequentially arranged along the other short side of the substrate 141. For example, three dipoles D may be provided. For example, the fourth antenna portion 147 may detect a horizontally polarized wave.

The dummy antenna portion 148 may be formed on the cover frame 143. The dummy antenna portion 148 may include a first dummy antenna portion 148a and a second dummy antenna portion 148b. The first dummy antenna portion 148a and the second dummy antenna portion 148b may be opposite each other with respect to the opening 143P of the cover frame 143. The dummy antenna portion 148 may include a plurality of rectangular patches or electrodes. The plurality of patches or electrodes may be sequentially arranged along the longitudinal direction of the substrate 141. The dummy antenna portion 148 may reduce noise.

A fastening hole h may be formed through the front and rear surfaces of the substrate 141. There may be a plurality of fastening holes h. A first fastening hole h may be formed between the first antenna portion 144 and the third antenna portion 146, a second fastening hole h may be formed between the first antenna portion 144 and the fourth antenna portion 147. A ground electrode EL may be formed around the fastening hole h. The fastening hole h and/or the ground electrode EL may be omitted.

Accordingly, the second antenna module 140 may improve the transmission and reception sensitivity of radio waves.

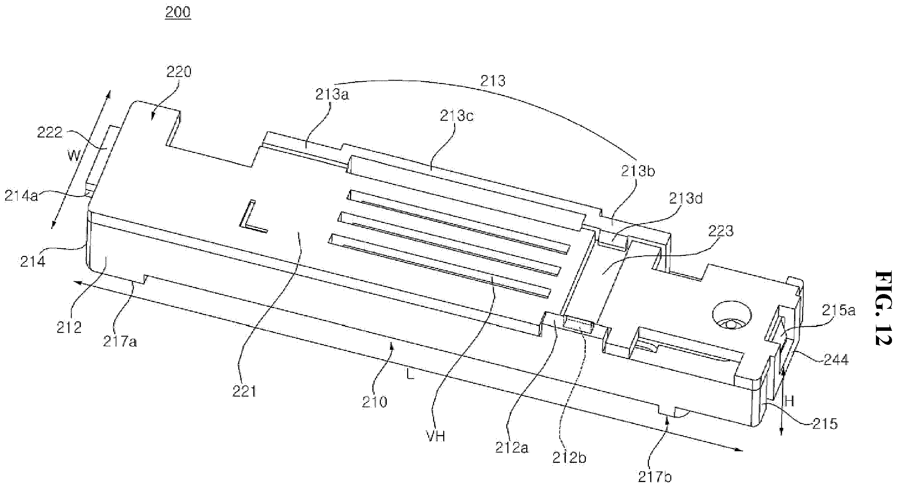

Referring to FIGS. 12 to 14, an antenna case 200 may include a lower case 210 and an upper case 220. The antenna case 200 may be referred to as an antenna bracket 200, an inner bracket 200, or an inner case 200.

The lower case 210 may include a bottom part 211 and a side part 212, 213, 214, 215. The bottom part 211 may define a bottom surface of the lower case 210. The side part 212, 213, 214, 215 may form a wall with respect to the bottom part 211. For example, the lower case 210 may have the shape of a generally long rectangular tub.

The bottom part 211 may include a base surface 211a, a first opening portion 216a, and a second opening portion 216b. The first opening portion 216a may be referred to as a patch opening 216a or a main opening 216a. The second opening portion 216b may be referred to as a dipole opening 216b or a sub opening 216b.

The base surface 211a may define a flat surface of the bottom part 211. The first opening portion 216a may be formed through the base surface 211a. The first opening portion 216a may be a long rectangular opening. The second opening portion 216b may be adjacent to the first opening portion 216a and formed in proximity to one end of the bottom part 211.

A holding rib 217b may be formed at one corner of the first opening portion 216a. The holding rib 217b may protrude from one corner of the first opening portion 216a. A holding strut 217a may be positioned between the first opening portion 216a and the second opening portion 216b. The holding strut 217a may connect one long side and the other long side of the first opening portion 216a.

The holding rib 217b may be stepped upward from the base surface 211a. The holding strut 217a may be positioned at the same level as the holding rib 217b. The holding rib 217b and the holding strut 217a may be positioned at a different level from the base surface 211a. For example, the holding rib 217b and the holding strut 217a may be positioned at a lower level than the base surface 211a.

The side part 212, 213, 214, 215 may include a front wall 212, a rear wall 213, a first side wall 214, and a second side wall 215. The front wall 212 may include a coupling rib 212a protruding upward from an upper end thereof, and a front coupling protrusion 212b protruding from the coupling rib 212a toward the rear wall 213.

The rear wall 213 may face the front wall 212. A height of the front wall 212 may be less than a height of the rear wall 213. The rear wall 213 may include a first support part 213a, a second support part 213b, and a gap part 213c. The gap part 213c may form a step elevated toward the rear of the first support part 213a and/or the second support part 213b. A distance from the first support part 213a to the front wall 212 may be greater than a distance from the gap part 213c to the front wall 212. A distance from the second support part 213b to the front wall 212 may be greater than the distance from the gap part 213c to the front wall 212. A rear coupling protrusion 213d may protrude toward the front wall 212 from an inner surface of the second support part 213b of the rear wall 213.

The first side wall 214 may connect one end of the front wall 212 and one end of the rear wall 213. The second side wall 215 may connect the other end of the front wall 212 and the other end of the rear wall 213. The first side wall 214 may include a hinge tip 214a. The hinge tip 214a may be formed on an outer surface of the first side wall 214. The second side wall 215 may include a hook 215a. The hook 215a may be formed on an outer surface of the second side wall 215.

The upper case 220 may include a top plate 221, a hinge tip 222, a hook holder 224, and a coupling trench 223. The hinge tip 222 may be formed at one end of the top plate 221. The hinge tip 222 of the upper case 220 may be connected to the hinge tip 214a of the lower case 210. The hinge tip 222 of the upper case 220 may be foldable with respect to the hinge tip 214a of the lower case 210. The coupling trench 223 may be stepped downward from an outer surface of the top plate 221. The coupling trench 223 may be aligned with the front coupling protrusion 212b and the rear coupling protrusion 213d. When the upper case 220 covers the lower case 210, the front coupling protrusion 212b and the rear coupling protrusion 213d may be supported by or in contact with the coupling trench 223. The hook holder 224 may be formed at the other end of the top plate 221. The hook 215a of the lower case 210 may be engaged with the hook holder 224 of the upper case 220. A heat dissipation hole VH may be formed in the top plate 221.

For example, the antenna case 200 may have a length L of 54 to 56 mm, a width W of 11 to 13 mm, and a height H of 4 to 6 mm.

The antenna module 130, 140 may be accommodated in the lower case 210, and may be covered by the upper case 220. The first antenna portion 134, 144 of the antenna module 130, 140 may be exposed to the outside of the lower case 210 through the first opening portion 216a of the lower case 210. In addition, the second antenna portion 135, 145 of the antenna module 130, 140 may be exposed to the outside of the lower case 210 through the first opening portion 216a of the lower case 210. For example, the antenna case 200 may be formed of an ABS resin.

The fourth antenna portion 137, 147 of the antenna module 130, 140 may be exposed to the outside through the second opening portion 216b of the lower case 210. Any one of the third antenna portion 136, 146 and the fourth antenna portion 137, 147 of the antenna module 130, 140 may not be exposed to the outside of the lower case 210.

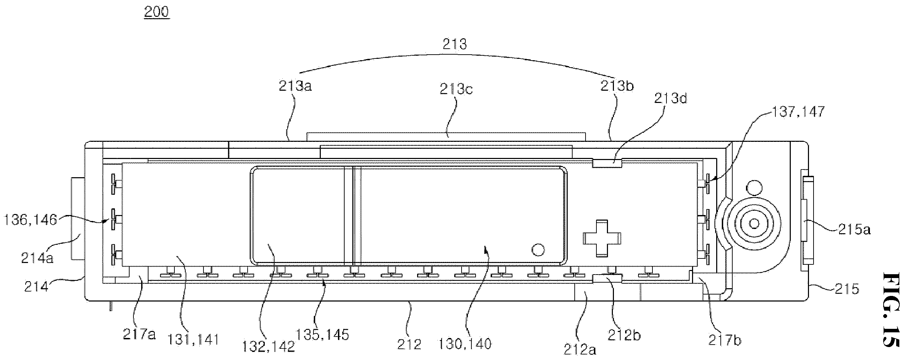

Referring to FIG. 15, the antenna module 130, 140 may include a substrate 131, 141 and a shield cover 132, 142. The substrate 131, 141 may include a front surface and a rear surface. Electronic elements may be mounted on the rear surface of the substrate 131, 141. The shield cover 132, 142 may be coupled to the rear surface of the substrate 131, 141 while covering the electronic elements. The shield cover 132, 142 may be a conductor. For example, the shield cover 132, 142 may include metal.

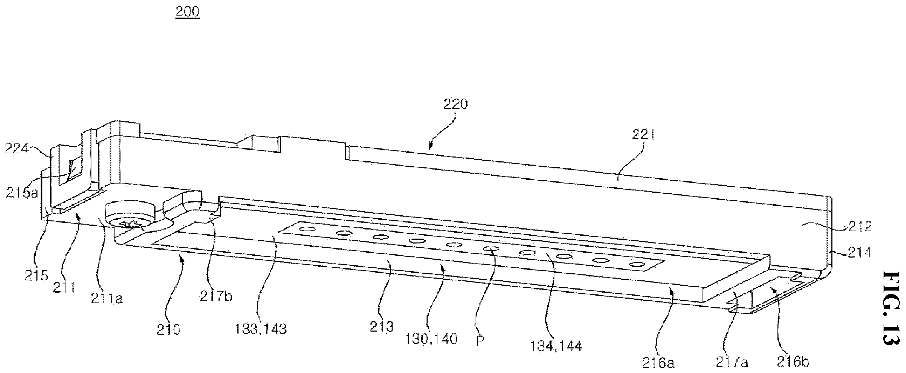

Referring also to FIG. 13, the first antenna portion 134, 144 may be formed on the front surface of the substrate 131, 141 and may be exposed to the outside through the opening 133P, 143P (see FIGS. 10 and 11) of the cover frame 133, 143. The second antenna portion 135, 145 may be positioned at a long side of the substrate 131, 141. The third antenna portion 136, 146 may be positioned at one short side of the substrate 131, 141, and the fourth antenna portion 137, 147 may be positioned at the other short side of the substrate 131, 141. The third antenna portion 136, 146 and the fourth antenna portion 137, 147 may be opposite each other with respect to the first antenna portion 134, 144.

For example, the first antenna portion 134, 144 may be exposed to the outside of the lower case 210. For example, the second antenna portion 135, 145 may be exposed to the outside of the lower case 210. For example, the third antenna portion 136, 146 may be exposed to the outside of the lower case 210. For example, the fourth antenna portion 137, 147 may not be exposed to the outside of the lower case 210.

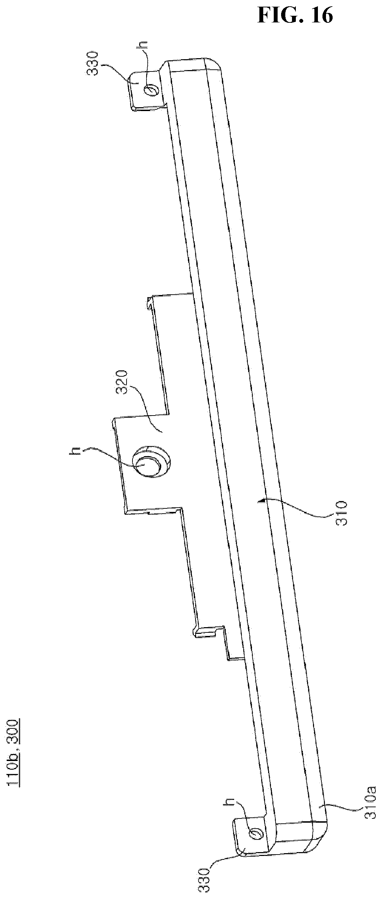

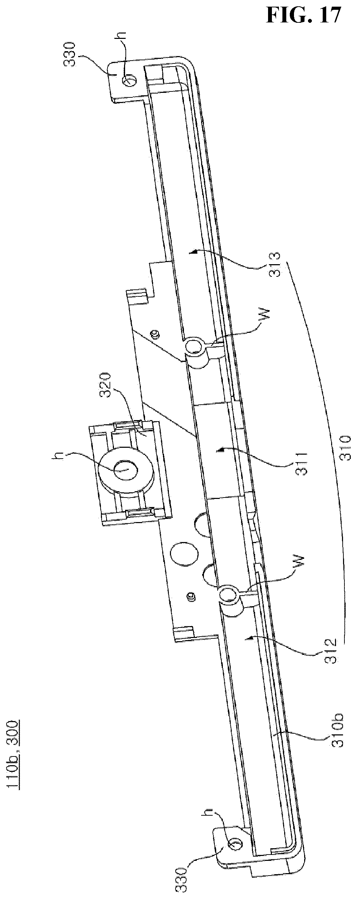

Referring to FIGS. 16 and 17, the front cover 110b, 300 may include an antenna dome 310, a center part 320, and a side part 330. The antenna dome 310 may be referred to as a radome 310 or a communication box cover 310. The antenna dome 310 may function as a radome of the antennas 134, 135, 136, 137, 144, 145, 146, and 147 (see FIGS. 10 and 11) of the antenna modules 130 and 140 (see FIGS. 10 and 11).

The antenna dome 310 may have the shape of an elongated tub. The center part 320 may be formed above a central portion of the antenna dome 310. The side part 330 may be configured as a pair of side parts. The pair of side parts 330 may be formed on upper left and right sides of the antenna dome 310. For example, the antenna dome 310 may be made of an ABS resin.

The antenna dome 310 may include a center dome 311, a first dome 312, and a second dome 313. The center dome 311 may be positioned below the center part 320. The first dome 312 may be positioned opposite the second dome 313 with respect to the center dome 311. A first partition W may partition the first dome 312 and the center dome 311, and a second partition W may partition the center dome 311 and the second dome 313. The first dome 312 may cover the left antenna module 130, and the second dome 313 may cover the right antenna module 140.

An edge 310a of an outer surface of the antenna dome 310 may be rounded. A corner 310b of an inner surface of the antenna dome 310 may be rounded.

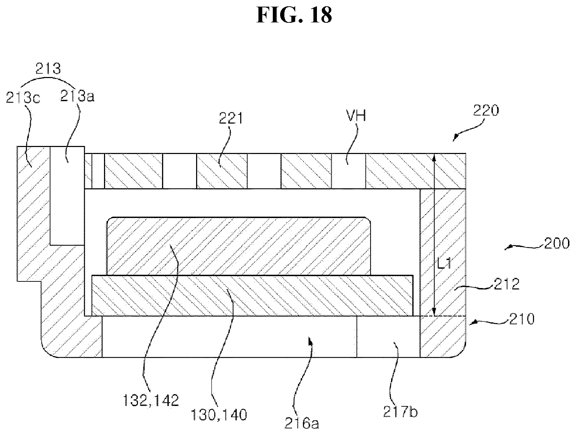

Referring to FIGS. 18 to 20 along with FIG. 9, the antenna module 130, 140 may be accommodated in the antenna case 200. The antenna case 200, which houses the antenna module 130, 140, may be positioned within the antenna dome 310. The antenna case 200 may be positioned in an accommodation space formed as the antenna dome 310 is coupled to the rear cover 110a of the communication module 100 (see FIG. 9).

The first connecting plate 122 may extend to the inside of the antenna case 200. The first connecting plate 122 may include a connecting portion 122a and an extension portion 122c. The connecting portion 122a may extend from the outside of the antenna case 200 and be inserted into the antenna case 200. The extension portion 122c may be bent from the connecting portion 122a and positioned over the antenna module 130, 140. The antenna module 130, 140 may be coupled to or in contact with the extension portion 122. The connecting portion 122a and/or the extension portion 122c may be referred to as a first part (122a,122c). The description of the first connecting plate 122 is equally applicable to the second connecting plate123.

A front surface of the front wall 212 of the antenna case 200 may be positioned rearward relative to the front surface of the display panel 10. The front surface of the front wall 212 of the antenna case 200 may be positioned between the front surface of the display panel 10 and the front surface of the frame 20.

A combined height H (see FIG. 12) of the height of the front wall 212 of the lower case 210 and the thickness of the top plate 221 of the upper case 220 of the antenna case 200 may be defined as an inner barrier 212, 221. A front portion 310F of the antenna dome 310 may be defined as a front outer barrier 310F. A lower portion 310L of the antenna dome 310 may be defined as a lower outer barrier 310L. A corner portion 310C that connects the front portion 310F and the lower portion 310L of the antenna dome 310 may be defined as a round outer barrier 310C. An outer barrier 310 may include the front outer barrier 310F, the lower outer barrier 310L, and the round outer barrier 310C. A length L2 of the outer barrier 310 may be twice a length L1 of the inner barrier 212, 221.

A front surface of the front outer barrier 310F of the outer barrier 310 may be aligned with the front surface of the display panel 10. The front outer barrier 310F may be referred to as a first surface 310F of the antenna dome 310. The inner barrier 212, 221 may be referred to as a first surface 212, 221 of the antenna case 200. The lower outer barrier 310L and the round outer barrier 310C may be collectively referred to as a second surface 310L, 310C. The round outer barrier 310C may be omitted, and, in this case, the lower outer barrier 310L may be referred to as a second surface 310L.

For example, an effective reception wavelength of the antenna module 130, 140 may be in a range of 57 to 66 GHz. For example, a thickness T1 of the inner barrier 212, 221 may be 1 to 2 mm. For example, a thickness T2 of the outer barrier 310 may be 1 to 2 mm.

For example, the length L1 of the inner barrier 212, 221 may be about one time (approximately equal to) the reception wavelength of the antenna 130, 140. For example, the length L2 of the outer barrier 310 may be about twice the reception wavelength of the antenna 130, 140. For example, the length L2 of the outer barrier 310 may be about twice the length L1 of the inner barrier 212, 221. As another example, the length L2 of the outer barrier 310 may be equal to or greater than twice the length L1 of the inner barrier 212, 221.

For example, a gap G1 between an edge of the antenna module 130, 140 and the inner barrier 212, 221 may be 0.1 to 0.3 mm. For example, a gap G2 between the inner barrier 212, 221 and the front outer barrier 310F may be 0.4 to 0.6 mm. For example, a gap G0 between a lower end of the inner barrier 212, 221 and the lower outer barrier 310L may be 0.4 to 0.6 mm.

As another example, the effective reception wavelength of the antenna module 130, 140 may be 61.5 GHz. As another example, the thickness T1 of the inner barrier 212, 221 may be 1.5 mm. As another example, the thickness T2 of the outer barrier 310 may be 1.5 mm.

As another example, the length L1 of the inner barrier 212, 221 may be about 4.6 mm. As another example, the length L2 of the outer barrier 310 may be 9.9 mm. As another example, the round outer barrier 310C may have a curvature of radius of 3R.

As another example, the gap G1 between the edge of the antenna module 130, 140 and the inner barrier 212, 221 may be 0.2 mm. As another example, the gap G2 between the inner barrier 212, 221 and the front outer barrier 310F may be 0.5 mm. As another example, the gap G0 between the lower end of the inner barrier 212, 221 and the lower outer barrier 310L may be 0.5 mm.

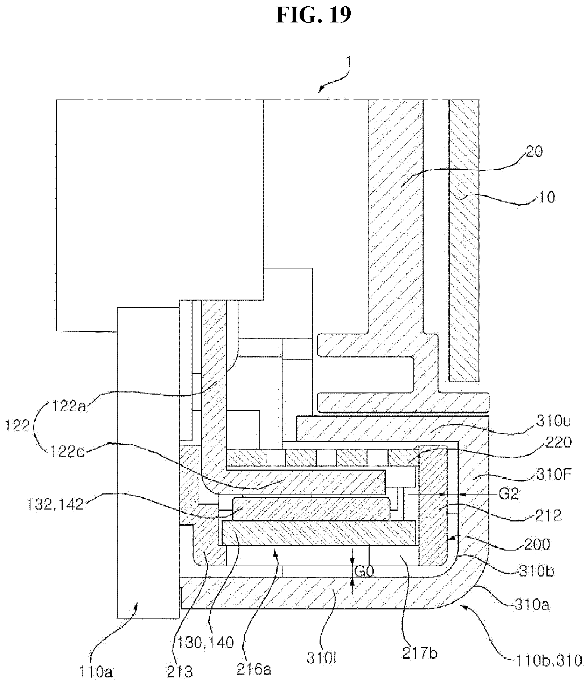

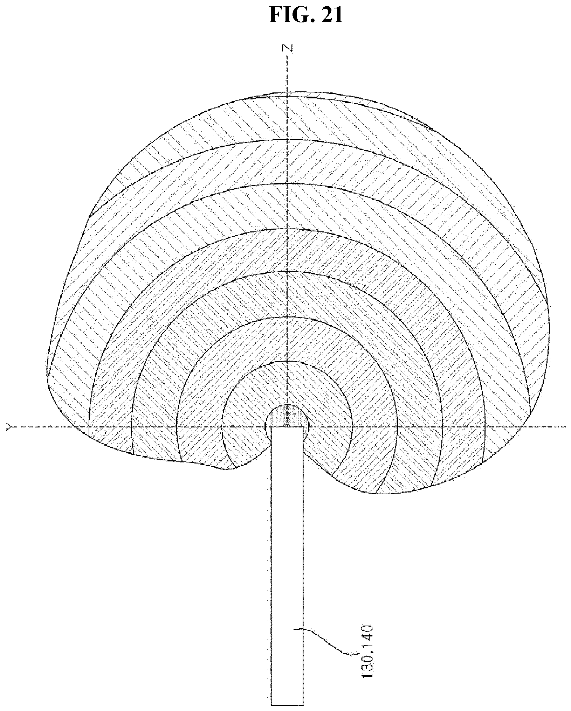

Referring to FIG. 21, it shows a beam pattern formed by the antenna module 130, 140 while the antenna module 130, 140 are fully exposed to the outside. It can be seen that the beam pattern is evenly distributed upward and downward from the front of the antenna module 130, 140. Referring to FIG. 19, when the antenna module 130, 140 are mounted to a lower portion of the display device 1, the antenna module 130, 140 may be positioned under the frame 20 including metal. In this case, the frame 20 including metal may affect the beam pattern of the antenna module 130, 140. Accordingly, reception sensitivity of the antenna module 130, 140 may be reduced or degraded due to the influence of the frame 20.

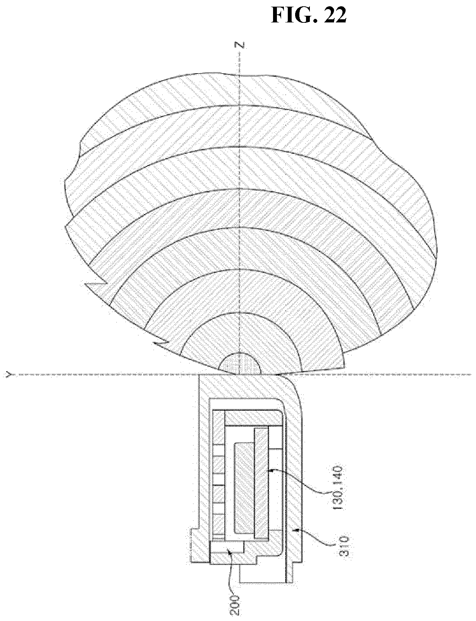

Referring to FIG. 22, it shows a beam pattern formed by the antenna module 130, 140 while the antenna module 130, 140 are accommodated in the antenna case 200 and the antenna case 200, which houses the antenna module 130, 140, is positioned inside the antenna dome 310. It can be seen that the beam pattern is evenly distributed upward and downward from the front of the antenna module 130, 140, the antenna case 200, and the antenna dome 310.

Even when the antenna module 130, 140 are positioned under the frame 20 including metal, the antenna case 200 and the antenna dome 310 may allow the beam pattern of the antenna module 130, 140 to be well-formed. Accordingly, it is possible to enhance sensitivity of the antenna module 130, 140 mounted to the display device 1 (see FIG. 19).

Referring to FIGS. 1 to 22, a display device may include: a display panel 10 including a flat surface on which an image is displayed; a frame 20 disposed at a rear of the display panel 10 and to which the display panel 10 is couped; and a communication box positioned adjacent to one side of the frame 20 and coupled to the frame 20. The communication box may include: an antenna 130, 140 including a flat surface defined in a direction that intersects the flat surface of the display panel 10; an outer barrier 310 positioned forward of the antenna 130, 140 facing the front of the display panel 10; and an inner barrier 212, 221 positioned between the antenna 130, 140 and the outer barrier 310. The outer barrier 310 may include: a front outer barrier 310F positioned forward of the inner barrier 212, 221; a lower outer barrier 310L positioned below the inner barrier 212, 221; and a round outer barrier 310C that connects the front outer barrier 310F and the lower outer barrier 310L and forms a corner.

The inner barrier 212, 221 may intersect the flat surface of the antenna 130, 140, and may extend in a direction parallel to the flat surface of the display panel 10. The front outer barrier 310F may extend in a direction parallel to the inner barrier 212, 221. The lower outer barrier 310L may extend in a direction parallel to the flat surface of antenna 130, 140.

One end of the lower outer barrier 310L may be connected to a front edge of the antenna 130, 140, and the other end of the lower outer barrier 310L may be connected to the round outer barrier 310C.

A length of the outer barrier 310 may be at least twice a length of the inner barrier 212, 221.

A first gap G1 from the front edge of the antenna 130, 140 may be less than a second gap G2 from the inner barrier 212, 221 to the front outer barrier 310F.

A third gap G0 from a lower end of the inner barrier 212, 221 to the lower outer barrier 310L may be greater than the first gap G1.

A thickness T1 of the inner barrier 212, 221 may be greater than the second gap G2, and a thickness T2 of the outer barrier 310 may be greater than the second gap G2.

The thickness T1 of the inner barrier 212, 221 may be equal to the thickness T2 of the outer barrier 310.

The display device 1 may further include: an antenna case 200 to accommodate the antenna 130, 140. The antenna case 200 may include: a lower case 210 that provides an accommodation space for the antenna 130, 140; and an upper case 220 covering the lower case 210. The lower case 210 may include: a bottom part 211 facing the flat surface of the antenna 130, 140; and a side part 212, 213, 214, 215 forming a wall with respect to the bottom part 211. The bottom part 211 may include a first opening portion 216a through which the flat surface of the antenna 130, 140 is exposed to an outside.

The side part 212, 213, 214, 215 may include: a front wall 212 defining at least a portion of the inner barrier 212, 221; a rear wall 213 facing the front wall 212; and a side wall 214, 215 connecting the front wall 212 and the rear wall 213.

The bottom part 211 may further include a second opening portion 216b adjacent to the first opening portion 216a.

The antenna 130, 140 may include: a substrate 131, 141 having one surface that defines the flat surface; a first antenna portion 134, 144 positioned on the one surface of the substrate 131, 141; a second antenna portion 135, 145 positioned on one side of the substrate 131, 141; and a third antenna portion 136, 146 positioned on another side of the substrate 131, 141 that is connected to the one side of the substrate 131, 141. The first antenna portion 134, 144 may be aligned with the first opening portion 216a of the lower case 210, the second antenna portion 135, 145 may be exposed to the outside through the first opening portion 216a of the lower case 210, and the third antenna portion 136, 146 may be exposed to the outside through the second opening portion 216b of the lower case 210.

The first antenna portion 134, 144 may include a plurality of patches P. The second antenna portion 135, 145 may include a first plurality of dipoles D. The third antenna portion 136, 146 may include a second plurality of dipoles D. The number of the first plurality of dipoles D may be greater than the number of the second plurality of dipoles D.

The antenna 130, 140 may include a cover layer 133, 143 covering the one surface of the substrate 131, 141 and configured to expose the first antenna portion 134, 144.

The frame 20 may include a metal. The inner barrier 212, 221 and the outer barrier 310 may each include a synthetic resin.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device comprising:
a display panel(10) displaying an image;
a frame(20) disposed at a rear of the display panel(10) and to which the display panel(10) is coupled;
a communication box positioned at one side of the frame(20); and
an inner plate(120) adjacent to the one side of the frame(20) and coupled to a rear of the frame(20), the inner plate(120) including a first part extending to an inside of the communication box,
wherein the communication box comprises:
a communication box cover(310) forming an outer appearance of the communication box;
an antenna module(130,140) positioned inside the communication box cover(310) and in contact with the first part of the inner plate(120); and
an antenna case(200) positioned outside the antenna module(130,140) and a portion of the first part of the inner plate(120), the antenna case(200) covering the antenna module(130,140),
wherein:
the antenna module(130,140) comprises a first array antenna disposed toward a front of the display panel(10);
the antenna case(200) comprises a first surface facing the first array antenna(135,145) of the antenna module(130,140); and
the communication box cover(310) comprises a first surface facing the first surface of the antenna case(200), and
wherein the first surface of the antenna case(200) functions as a first radome of the first array antenna(135,145), and the first surface of the communication box cover(310) functions as a second radome of the first array antenna(135,145).

2. The display device of claim 1, wherein a flat surface of the antenna module(130,140) is aligned with a direction intersecting a flat surface of the display panel(10),
wherein the first surface of the antenna case(200) is aligned with a direction intersecting the flat surface of the antenna module(130,140), and extends in a direction parallel to the flat surface of the display panel(10), and
wherein the first surface of the communication box cover(310) extends in a direction parallel to the first surface of the antenna case(200).

3. The display device of claim 1 or 2, wherein the communication box cover(310) further comprises a second surface connected to the first surface of the communication box cover(310) and positioned below the antenna module(130,140), and
wherein one end of the second surface of the communication box cover(310) is aligned with a front edge of the antenna module(130,140).

4. The display device of claim 3, wherein a length of the first surface and the second surface of the communication box cover(310) is at least twice a length of the first surface of the antenna case(200).

5. The display device of claim 3 or 4, wherein a first gap(G1) from the front edge of the antenna module(130,140) to the first surface of the antenna case(200) is less than a second gap(G2) from the first surface of the antenna case(200) to the first surface of the communication box cover(310).

6. The display device of claim 5, wherein a third gap(G0) from a lower end of the first surface of the antenna case(200) to the second surface of the communication box cover(310) is greater than the first gap(G1).

7. The display device of any one of claims 1 to 6, wherein the antenna case(200) comprises:
a lower case(210) providing an accommodation space for the antenna module(130,140); and
an upper case(220) covering the lower case(210),
wherein the lower case(210) comprises:
a bottom part(211) facing a lower surface of the antenna module(130,140); and
a side part(212,213,214,215) that forms a wall with respect to the bottom part(211), and
wherein the bottom part(211) comprises a first opening portion through which the lower surface of the antenna module(130,140) is exposed to an outside.

8. The display device of claim 7, wherein the side part(212,213,214,215) comprises:
a front wall(212) forming at least a portion of the first surface of the antenna case(200);
a rear wall(213) facing the front wall(212); and
a side wall(214,215) connecting the front wall(212) and the rear wall(213).

9. The display device of claim 7 or 8, wherein the bottom part(211) further comprises a second opening portion adjacent to the first opening portion.

10. The display device of claim 9, wherein the antenna module(130,140) comprises:
a substrate(131,141) having one surface providing the lower surface;
a first antenna portion positioned on the one surface of the substrate(131,141);
a second antenna portion positioned on one side of the substrate(131,141); and
a third antenna portion positioned on another side of the substrate(131,141) that is connected to the one side of the substrate(131,141),
wherein the first antenna portion is aligned with the first opening portion of the lower case(210),
wherein the second antenna portion is exposed to the outside through the first opening portion of the lower case(210),
wherein the third antenna portion is exposed to the outside through the second opening portion of the lower case(210),
and
wherein the second antenna portion is the first array antenna(135,145).

11. The display device of claim 10, wherein the first antenna portion comprises a plurality of patches(P),
wherein the second antenna portion comprises a first plurality of dipoles(D),
wherein the third antenna portion comprises a second plurality of dipoles(D), and
wherein a number of the first plurality of dipoles(D) is greater than a number of the second plurality of dipoles(D).

12. The display device of claim 10 or 11, wherein the antenna module(130,140) comprises a cover layer(133,143) covering the one surface of the substrate(131,141) and exposeing the first antenna portion.

13. The display device of any one of claims 1 to 12, wherein the frame(20) includes a metal, and
wherein the antenna case(200) and the communication box each include a synthetic resin.
